(19) Europäisches Patentamt / European Patent Office / Office européen des brevets

(11) **EP 1 599 627 B1**

(12) **EUROPEAN PATENT SPECIFICATION**

(45) Date of publication and mention
of the grant of the patent:
**29.10.2008 Bulletin 2008/44**

(51) Int Cl.:
***D04H 1/48*** *(2006.01)*          ***D04H 1/62*** *(2006.01)*
***D04H 1/64*** *(2006.01)*          ***D04H 3/12*** *(2006.01)*
***D04H 5/04*** *(2006.01)*

(21) Application number: **04710244.7**

(22) Date of filing: **11.02.2004**

(86) International application number:
**PCT/US2004/004062**

(87) International publication number:
**WO 2004/079076 (16.09.2004 Gazette 2004/38)**

(54) **TEXTURED FABRIC CONTAINING A TREATMENT COMPOSITION**

TEXTURIERTES, EINE BEHANDLUNGSZUSAMMENSETZUNG ENTHALTENDES GEWEBE

TISSU TEXTURE CONTENANT UNE COMPOSITION DE TRAITEMENT

(84) Designated Contracting States:
**DE FR GB IT SE**

(30) Priority: **03.03.2003 US 378282**

(43) Date of publication of application:
**30.11.2005 Bulletin 2005/48**

(73) Proprietor: **KIMBERLY-CLARK WORLDWIDE, INC.
Neenah WI 54956 (US)**

(72) Inventors:
• **CLARK, James, W.
Roswell, GA 30075 (US)**
• **XIE, Ming
Marietta, GA 30062 (US)**

• **DETAMORE, James
Alpharetta, GA 30004 (US)**

(74) Representative: **Davies, Christopher Robert
Frank B. Dehn & Co.
St Bride's House
10 Salisbury Square
London
EC4Y 8JD (GB)**

(56) References cited:
**EP-A- 0 333 209          EP-A- 1 059 378
EP-A- 1 236 827          US-A- 3 765 974
US-A- 4 134 948          US-A- 5 284 703
US-A- 6 103 061**

**Description**

Wipers and other products are often printed with certain chemicals to form logos, hide food stains, etc. Unfortunately, however, the harsh environments to which these products are exposed may cause the printed chemicals to be removed after only a short period of time. For example, wipers in the food service industry are often used with harsh cleaners, such as bleach (e.g., sodium hypochlorite), acid-based soaps, or commercial mixtures, e.g., The Clorox Company's Formula 409® "all purpose" cleaner, which contains water, detergents, and the grease cutter 2-butoxyethanol (an alcohol). Cleaning solutions also often contain sanitizing chemicals, which may readily remove the treatment from a printed substrate.

In response to this problem, treatment compositions were developed that remain on the fabric when exposed to common chemical cleaning chemicals. For instance, U.S. Patent No. 5,853,859 to Levy, et al., which is assigned to Kimberly-Clark Worldwide, Inc., describes a treatment composition that comprises a room temperature curable latex polymer, a pigment, and a cure promoter. The treatment composition may be "pattern printed" onto a high pulp nonwoven composite using printing techniques, such as flexographic printing, gravure printing, screen printing, or ink jet printing. When pattern printed onto a substrate and dried, the fabric retains a colorfastness above 3 when exposed to liquids with a pH from about 2 to about 13.

Despite the advances attained, however, a need for improvement nevertheless remains. For instance, "pattern printing" of fabrics with such compositions may sometimes result in the production of lint, which is defined as individual airborne fibers and fiber fragments. Specifically, much of the user-contacting surface of the printed fabrics remain uncoated with the treatment. Accordingly, fibers and fiber fragments may be easily removed during use. Unfortunately, however, previous efforts to reduce lint by coating the entire surface have proven problematic because the absorbency of the fabric is adversely affected.

As such, a need currently exists for a fabric that has low lint and maintains good absorbency, and yet retains the desired colorfastness when applied with a treatment composition.

US-A-6,103,061 describes a nonwoven fabric hdryo-entangled with a fibrous component having a surface with peaks and valleys.

US-A-3,765,974 describes a method of spot bonding a nonwoven fabric.

## Summary of the Invention

The invention is characterized as set out in claims 1 and 14. A textured fabric that comprises a nonwoven web is disclosed. The textured fabric is a composite of a nonwoven web hydraulically entangled with a fibrous component (e.g., cellulosic fibers). The fibrous component may comprise greater than about 50% by weight of the textured fabric, and in some embodiments, from about 60% to about 90% by weight of the textured fabric. In one embodiment, at least a portion of the textured fabric is creped (e.g., wet and/or dry creped).

Regardless of the construction of the textured fabric, at least one surface of the fabric contains peaks and valleys, wherein greater than about 90% of the peaks and less than about 10% of the valleys are disposed with a treatment composition. In some embodiments, approximately 100% of the peaks are disposed with the treatment composition, and in some embodiments, approximately 0% of the valleys are disposed with the treatment composition. The treatment composition comprises a latex polymer and optionally other components, such as a cure promoter, a pigment, water, etc. The latex polymer may be selected from the group consisting of ethylene vinyl acetates, ethylene vinyl chlorides, styrene-butadiene, acrylates and styrene-acrylate copolymers. The solids add-on level of the treatment composition may be from about 0.1% to about 20%, and in some embodiments, from about 0.5% to about 5%.

The present invention also provides a method for forming a product that generates relatively low levels of lint. The preferred method comprises:

> providing a nonwoven web;
> hydraulically entangling the nonwoven web with a fibrous component to form a fabric, wherein the fibrous component comprises greater than about 50% by weight of the fabric;
> adhering the fabric to a creping surface and creping the fabric therefrom, wherein the creped fabric has peaks and valleys; and
> coating the fabric with a treatment composition that comprises a crosslinkable latex polymer so that greater than about 90% of the peaks and less than about 10% of the valleys contain the treatment composition.

In some embodiments, the fabric is supported by a patterned surface during creping. Further, the fabric may be pressed into engagement with the creping surface at a pressure of from about 50 to about 350 pounds per linear inch (pli) (8.9 to 62.3 kg/cm), and in some embodiments, at a pressure of from about 150 to about 250 pil (26.7 to 4.4.5 kg/cm). A creping adhesive may also be used to facilitate the adherence of the fabric to the creping surface.

Other features and aspects of the present invention are discussed in greater detail below.

## Brief Description of the Drawings

A full and enabling disclosure of the present invention, including the best mode thereof, directed to one of ordinary skill in the art, is set forth more particularly in the remainder of the specification, which makes reference to the appended figures in which:

> Fig. 1 is a schematic illustration of a process for forming a hydraulically entangled fabric in accordance with one embodiment of the present invention;
> Fig. 2 is a schematic illustration of a process for creping a fabric in accordance with one embodiment of the present invention;
> Fig. 3 is a schematic illustration of a process for coating a textured fabric in accordance with one embodiment of the present invention;
> Fig. 4 is a perspective view of a textured fabric having peaks and valleys in accordance with one embodiment of the present invention; and
> Fig. 5 is a microphotograph of a cross section of a treated textured fabric formed according to Example 1.

Repeat use of reference characters in the present specification and drawings is intended to represent same or analogous features or elements of the invention.

## Detailed Description of Representative Embodiments

Reference now will be made in detail to various embodiments of the invention, one or more examples of which are set forth below. Each example is provided by way of explanation of the invention, not limitation of the invention. In fact, it will be apparent to those skilled in the art that various modifications and variations may be made in the present invention without departing from the scope of the invention. For instance, features illustrated or described as part of one embodiment, may be used on another embodiment to yield a still further embodiment. Thus, it is intended that the present invention covers such modifications and variations as come within the scope of the appended claims and their equivalents.

Definitions

As used herein, the term "nonwoven web" refers to a web having a structure of individual fibers or threads that are interlaid, but not in an identifiable manner as in a knitted fabric. Nonwoven webs include, for example, meltblown webs, spunbond webs, carded webs, etc.

As used herein, the term "spunbond web" refers to a nonwoven web formed from small diameter substantially continuous fibers. The fibers are formed by extruding a molten thermoplastic material as filaments from a plurality of fine, usually circular, capillaries of a spinnerette with the diameter of the extruded fibers then being rapidly reduced as by, for example, eductive drawing and/or other well-known spunbonding mechanisms. The production of spunbond webs is described and illustrated, for example, in U.S. Patent Nos. 4,340,563 to Appel, et al., 3,692,618 to Dorschner, et al., 3,802,817 to Matsuki, et al., 3,338,992 to Kinney, 3,341,394 to Kinney, 3,502,763 to Hartman, 3,502,538 to Levy, 3,542,615 to Dobo, et al., and 5,382,400 to Pike, et al. Spunbond fibers are not tacky when they are deposited onto a collecting surface. Spunbond fibers may sometimes have diameters less than about 40 microns, and are often from about 5 to about 20 microns.

As used herein, the term "meltblown web" refers to a nonwoven web formed from fibers extruded through a plurality of fine, usually circular, die capillaries as molten fibers into converging high velocity gas (e.g. air) streams that attenuate the fibers of molten thermoplastic material to reduce their diameter, which may be to microfiber diameter. Thereafter, the meltblown fibers are carried by the high velocity gas stream and are deposited on a collecting surface to form a web of randomly disbursed meltblown fibers. Such a process is disclosed, for example, in U.S. Pat. No. 3,849,241 to Butin, et al. In some instances, meltblown fibers may be microfibers that may be continuous or discontinuous, are generally smaller than 10 microns in diameter, and are tacky when deposited onto a collecting surface.

As used herein, the term "pulp" refers to fibers from natural sources such as woody and non-woody plants. Woody plants include, for example, deciduous and coniferous trees. Non-woody plants include, for example, cotton, flax, esparto grass, milkweed, straw, jute, hemp, and bagasse.

As used herein, the term "low-average fiber length pulp" refers to pulp that contains a significant amount of short fibers and non-fiber particles. Many secondary wood fiber pulps may be considered low average fiber length pulps; however, the quality of the secondary wood fiber pulp will depend on the quality of the recycled fibers and the type and amount of previous processing. Low-average fiber length pulps may have an average fiber length of less than about 1.2 mm as determined by an optical fiber analyzer such as, for example, a Kajaani fiber analyzer model No. FS-100 (Kajaani Oy Electronics, Kajaani, Finland). For example, low average fiber length pulps may have an average fiber length ranging from about 0.7 to 1.2 mm. Exemplary low average fiber length pulps include virgin hardwood pulp, and secondary fiber pulp from sources such as, for example, office waste, newsprint, and paperboard scrap.

As used herein, the term "high-average fiber length pulp" refers to pulp that contains a relatively small amount of short fibers and non-fiber particles. High-average fiber length pulp may be formed from certain non-secondary (i.e., virgin) fibers. Secondary fiber pulp that has been screened may also have a high-average fiber length. High-average fiber length pulps may have an average fiber length of greater than about 1.5 mm as determined by an optical fiber analyzer such as, for example, a Kajaani fiber analyzer model No. FS-100 (Kajaani Oy Electronics, Kajaani, Finland). For example, a high-average fiber length pulp may have an average fiber length from about 1.5 mm to about 6 mm. Exemplary high-average fiber length pulps that are wood fiber pulps include, for example, bleached and unbleached virgin softwood fiber pulps.

<u>Detailed Description</u>

The present invention is directed to a textured fabric having "peaks" and "valleys", or raised and depressed regions. In one embodiment, for example, the textured fabric is a hydraulically entangled composite fabric formed from a spunbond nonwoven web and pulp fibers. The peaks of the textured fabric are coated with a treatment composition to provide the fabric with various beneficial properties. For example, the treatment composition may contain a latex polymer that, when coated onto the fabric, forms a thin film layer on the fiber surface that prevents fibers or zones of fibers from breaking away from the surface as lint. Further, because the coating is applied only to the peaks, the valleys may remain free of the latex polymer and substantially maintain the absorbency of the uncoated fabric.

A. <u>Textured Fabrics</u>

The textured fabric contains at least one nonwoven web. Examples of nonwoven webs (apertured or non-apertured) include, but are not limited to, spunbonded webs, meltblown webs, bonded carded webs, air-laid webs, coform webs, hydraulically entangled webs, and so forth. The nonwoven web may be formed by a variety of different materials. For instance, some examples of suitable polymers that may be used to form the nonwoven web include, but are not limited to, polyolefins, polyesters, polyamides, as well as other melt-spinnable and/or fiber forming polymers. The polyamides that may be used in the practice of this invention may be any polyamide known to those skilled in the art including copolymers and mixtures thereof. Examples of polyamides and their methods of synthesis may be found in "Polyamide Resins" by Don E. Floyd (Library of Congress Catalog number 66-20811, Reinhold Publishing, NY, 1966). Particularly commercially useful polyamides are nylon-6, nylon 66, nylon-11 and nylon-12. These polyamides are available from a number of sources, such as Emser Industries of Sumter, S.C. (GRILON & GRILAMID nylons) and Atochem, Inc. Polymers Division, of Glen Rock, N.J. (RILSAN nylons), among others. Many polyolefins are available for fiber production, for example, polyethylenes such as Dow Chemical's ASPUN 6811A LLDPE (linear low density polyethylene), 2553 LLDPE and 25355 and 12350 high density polyethylene are such suitable polymers. Fiber forming polypropylenes include Exxon Chemical Company's ESCORENE PD 3445 polypropylene and Himont Chemical Co.'s PF-304. Numerous other suitable fiber forming polyolefins, in addition to those listed above, are also commercially available.

The materials used to form the nonwoven web may be in the form of continuous fibers, staple fibers, and so forth. Continuous fibers, for example, may be produced by known nonwoven extrusion processes, such as, for example, known solvent spinning or melt-spinning processes. In one embodiment, the nonwoven web contains continuous melt-spun fibers formed by a spunbond process. The spunbond fibers may be formed from any melt-spinnable polymer, co-polymers or blends thereof. The denier of the fibers used to form the nonwoven web may also vary. For instance, in one particular embodiment, the denier of polyolefin fibers used to form the nonwoven web is less than about 6, in some embodiments less than about 3, and in some embodiments, from about 1 to about 3.

Although not required, some or all of the fibers used to form the nonwoven web may also be bonded to improve the durability, strength, hand, and/or other properties of the web. For instance, the nonwoven web may be thermally, ultrasonically, adhesively and/or mechanically bonded. As an example, the nonwoven web may be point bonded such that it possesses numerous small, discrete bond points. An exemplary point bonding process is thermal point bonding, which involves passing one or more layers between heated rolls, such as an engraved patterned roll and a second bonding roll. The engraved roll is patterned in some way so that the web is not bonded over its entire surface, and the second roll may be smooth or patterned. As a result, various patterns for engraved rolls have been developed for functional as well as aesthetic reasons. Exemplary bond patterns include, but are not limited to, those described in U.S. Patent Nos. 3,855,046 to Hansen, et al., 5,620,779 to Levy, et al., 5,962,112 to Haynes, et al., 6,093,665 to Sayovitz, et al., U.S. Design Patent No. 428,267 to Romano, et al. and U.S. Design Patent No. 390,708 to Brown.

If desired, the total bond area and bond density may be selected to optimize the texture of the resulting fabric.

Specifically, for a given total bond area, smaller bond densities normally translate into larger bond points, which may enhance the texture of the web but reduce strength. Likewise, larger bond densities normally translate into smaller bond points, which may enhance the strength of the web but reduce texture. To balance these factors, the total bond area may be, for instance, less than about 30% (as determined by conventional optical microscopic methods), while the bond density may be greater than about 100 bonds per square inch. In some embodiments, the nonwoven web may have a total bond area from about 2% to about 30% and/or a bond density from about 250 to about 500 pin bonds per square inch. Such a combination of total bond area and/or bond density may, in some embodiments, be achieved by bonding the nonwoven web with a pin bond pattern having more than about 100 pin bonds per square inch that provides a total bond surface area less than about 30% when fully contacting a smooth anvil roll. In some embodiments, the bond pattern may have a pin bond density from about 250 to about 350 pin bonds per square inch (6.45 cm$^2$) and/or a total bond surface area from about 10% to about 25% when contacting a smooth anvil roll.

Further, the nonwoven web may also be bonded by continuous seams or patterns. As additional examples, the nonwoven web may be bonded along the periphery of the sheet or simply across the width or cross-direction (CD) of the web adjacent the edges. Other bond techniques, such as a combination of thermal bonding and latex impregnation, may also be used. Alternatively and/or additionally, a resin, latex or adhesive may be applied to the nonwoven web by, for example, spraying or printing, and dried to provide the desired bonding. Still other suitable bonding techniques may be described in U.S. Patent Nos. 5,284,703 to Everhart, et al., 6,103,061 to Anderson, et al., and 6,197,404 to Varona.

In some embodiments, the nonwoven web may also be combined with other materials and/or layers to form the textured fabric. For example, the nonwoven web may be combined with other nonwoven web layers to form a multi-layered nonwoven laminate. Suitable laminate materials may include, for instance, spunbond / meltblown / spunbond (SMS) laminates and spunbond / meltblown (SM) laminates. An SMS laminate may be made by sequentially depositing onto a moving forming belt a spunbond web layer, a meltblown web layer, and another spunbond layer, and thereafter bonding the laminate. Alternatively, the web layers may be made individually, collected in rolls, and combined in a separate bonding step. Such laminates usually have a basis weight of from about 0.1 to 12 ounces per square yard (osy) (3.4 to 408 gsm), in some embodiments, from about 0.5 to about 3 osy (17 to 102 gsm), and in some embodiments, from about 0.5 to about 1.5 osy (17 to 51 gsm). For instance, the meltblown layer of the SMS laminate may have a basis weight of less than about 0.3 osy (10.2 gsm), in some embodiments less than about 0.2 osy (6.2 gsm), and in some embodiments, from about 0.1 osy (3.4 gsm) to about 0.15 osy (5.1 gsm). Various examples of suitable SMS laminates are described in U.S. Patent Nos. 4,041,203 to Brock et al.; 5,213,881 to Timmons, et al.; 5,464,688 to Timmons, et al. ; 4,374,888 to Bomslaeger; 5,169,706 to Collier, et al.; and 4,766,029 to Brock et al. In addition, commercially available SMS laminates may be obtained from Kimberly-Clark Corporation under the designations Spunguard® and Evolution®.

In addition, elastic laminates may also be utilized. An elastic laminate may contain layers that are bonded together so that at least one of the layers has the characteristics of an elastic polymer. The elastic material used in the elastic laminates may be made from materials that are formed into films, such as a microporous film; fibrous webs, such as a web made from meltblown fibers or spunbond fibers; foams; and so forth. For example, in one embodiment, the elastic laminate may be a "neck-bonded" laminate. A "neck-bonded" laminate refers to a composite material having at least two layers in which one layer is a necked, non-elastic layer and the other layer Is an elastic layer. The resulting laminate is thereby a material that is elastic in the cross-direction. Some examples of neck-bonded laminates are described in U.S. Patent Nos. 5,226,992, 4,981,747, 4,965,122, and 5,336,545, all to Morman.

The elastic laminate may also be a "stretch-bonded" laminate, which refers to a composite material having at least two layers in which one layer is a gatherable layer and in which the other layer is an elastic layer. The layers are joined together when the elastic layer is in an extended condition so that upon relaxing the layers, the gatherable layer is gathered. For example, one elastic member may be bonded to another member while the elastic member is extended at least about 25% of its relaxed length. Such a multilayer composite elastic material may be stretched until the nonelastic layer is fully extended. One suitable type of stretch-bonded laminate is a spunbonded laminate, such as disclosed in U.S. Patent No. 4,720,415 to VanderWielen et al. Another suitable type of stretch-bonded laminate is a continuous fiber spunbonded laminate, such as disclosed in U.S. Patent No. 5,385,775 to Wright. For instance, Wright discloses a composite elastic material that includes: (1) an anisotropic elastic fibrous web having at least one layer of elastomeric meltblown fibers and at least one layer of elastomeric filaments autogenously bonded to at least a portion of the elastomeric meltblown fibers, and (2) at least one gatherable layer joined at spaced-apart locations to the anisotropic elastic fibrous web so that the gatherable layer is gathered between the spaced-apart locations. The gatherable layer is joined to the elastic fibrous web when the elastic web is in a stretched condition so that when the elastic web relaxes, the gatherable layer gathers between the spaced-apart bonding locations. Other composite elastic materials are described and disclosed in U.S. Patent Nos. 4,789,699 to Kieffer et al., 4,781,966 to Taylor, 4,657,802 to Morman, and 4,655,760 to Morman et al.

In one embodiment, the elastic laminate may also be a necked stretch bonded laminate. As used herein, a necked stretch bonded laminate is defined as a laminate made from the combination of a neck-bonded laminate and a stretch-bonded laminate. Examples of necked stretch bonded laminates are disclosed in U.S. Patent Nos. 5,114,781 and 5,116,662. Of particular advantage, a necked stretch bonded laminate may be stretchable in both the machine and cross-machine directions.

The textured fabric also includes a composite of a nonwoven web with another fibrous component. Tthe nonwoven web is integrally entangled with cellulosic fibers using hydraulic entanglement. The fibrous component may comprise greater than about 50% by weight of the fabric, and in some embodiments, from about 60% to about 90% by weight of the fabric. Likewise, in some embodiments, the nonwoven web may comprise less than about 50% by weight of the fabric, and in some embodiments, from about 10% to about 40% by weight of the fabric.

When utilized, the fibrous component may contain cellulosic fibers (e.g., pulp, thermomechanical pulp, synthetic cellulosic fibers, modified cellulosic fibers, and so forth), as well as other types of fibers (e.g., synthetic staple fibers). Some examples of suitable cellulosic fiber sources include virgin wood fibers, such as thermomechanical, bleached and unbleached softwood and hardwood pulps. Secondary or recycled fibers, such as obtained from office waste, newsprint, brown paper stock, paperboard scrap, etc., may also be used. Further, vegetable fibers, such as abaca, flax, milkweed, cotton, modified cotton, cotton linters, may also be used. In addition, synthetic cellulosic fibers such as, for example, rayon and viscose rayon may be used. Modified cellulosic fibers may also be used. For example, the fibrous material may include derivatives of cellulose formed by substitution of appropriate radicals (e.g., carboxyl, alkyl, acetate, nitrate, etc.) for hydroxyl groups along the carbon chain.

The pulp fibers may be high-average fiber length pulp, low-average fiber length pulp, or mixtures of the same. High-average fiber length pulp fibers may have an average fiber length from about 1.5 mm to about 6 mm. Some examples of such fibers may include, but are not limited to, northern softwood, southern softwood, redwood, red cedar, hemlock, pine (e.g., southern pines), spruce (e.g., black spruce), combinations thereof, and so forth. Exemplary high-average fiber length wood pulps include those available from the Kimberly-Clark Corporation under the trade designation "Longlac 19".

The low-average fiber length pulp may be, for example, certain virgin hardwood pulps and secondary (i.e. recycled) fiber pulp from sources such as, for example, newsprint, reclaimed paperboard, and office waste. Hardwood fibers, such as eucalyptus, maple, birch, aspen, and so forth, may also be used. Low-average fiber length pulp fibers may have an average fiber length of less than about 1.2 mm, for example, from 0.7 mm to 1.2 mm. Mixtures of high-average fiber length and low-average fiber length pulps may contain a significant proportion of low-average fiber length pulps. For example, mixtures may contain more than about 50 percent by weight low-average fiber length pulp and less than about 50 percent by weight high-average fiber length pulp. One exemplary mixture contains 75% by weight low-average fiber length pulp and about 25% by weight high-average fiber length pulp.

As stated above, non-cellulosic fibers may also be utilized in the fibrous component. Some examples of suitable non-cellulosic fibers that may be used include, but are not limited to, polyolefin fibers, polyester fibers, nylon fibers, polyvinyl acetate fibers, and mixtures thereof. In some embodiments, the non-cellulosic fibers may be staple fibers, which have, for example, an average fiber length of from about 0.1 inches to about 1 inch, and in some embodiments, from about 0.125 inches to about 0.75 inches. When non-cellulosic fibers are utilized, the fibrous component may contain from about 80% to about 90% by weight cellulosic fibers, such as softwood pulp fibers, and from about 10% to about 20% by weight non-cellulosic fibers, such as polyester or polyolefin staple fibers.

Small amounts of wet-strength resins and/or resin binders may be added to the cellulosic fiber component to improve strength and abrasion resistance. Crosslinking agents and/or hydrating agents may also be added to the pulp mixture. Debonding agents may be added to the pulp mixture. The addition of certain debonding agents in the amount of, for example, about 0.1% to about 4% percent by wight of the fabric also appears to reduce the measured static and dynamic coefficients of friction and improve the abrasion resistance of the composite fabric.

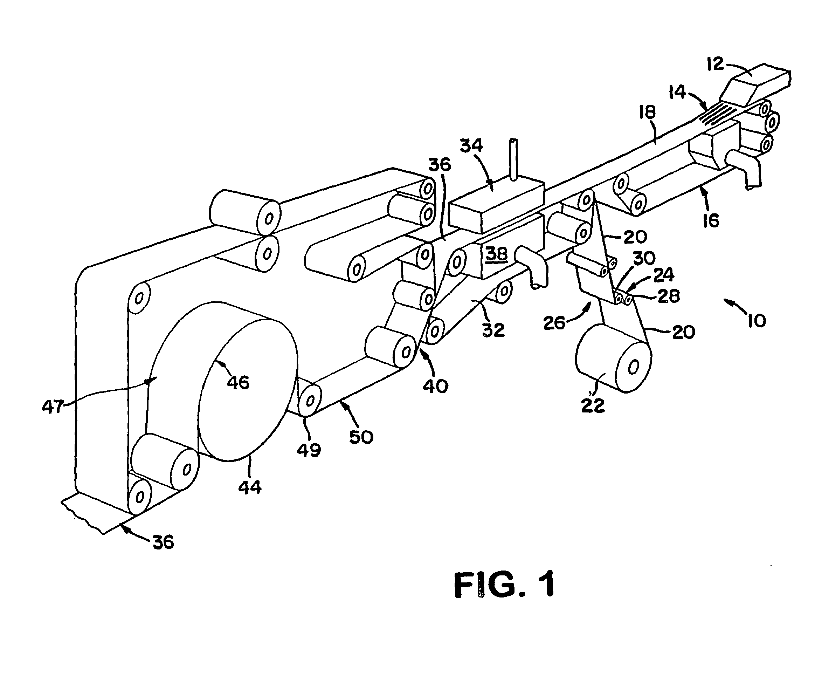

Referring to Fig. 1, one embodiment of the present invention for hydraulically entangling a fibrous component (e.g., cellulosic fibers) with a nonwoven web is illustrated. As shown, a fibrous slurry is conveyed to a conventional papermaking headbox 12 where it is deposited via a sluice 14 onto a conventional forming fabric or surface 16. If desired, the forming surface 16 may have a three-dimensional contour to enhance the texture of the resulting fabric. For instance, some suitable forming fabrics that may be used in the present invention include, but are not limited to, Albany 84M and 94M available from Albany International; Asten 856, 866, 892, 934, 939, 959, or 937; Asten Synweve Design 274, all of which are available from Asten Forming Fabrics, Inc. of Appleton, Wis. Other suitable forming fabrics may be described in U.S. Patent Nos. 6,120,640 to Lindsay, et al. and 4,529,480 to Trokhan.

The suspension of fibrous material may have any consistency used in conventional papermaking processes. For example, the suspension may contain from about 0.01 to about 1.5% by weight fibrous material suspended in water. Water is then removed from the suspension of fibrous material to form a uniform layer of the fibrous material 18.

A nonwoven web 20 is unwound from a rotating supply roll 22 and passes through a nip 24 of a S-roll arrangement 26 formed by the stack rollers 28 and 30. The nonwoven web 20 is then placed upon a foraminous entangling surface 32 of a conventional hydraulic entangling machine where the cellulosic fibrous layer 18 is then laid on the web 20. The surface 32 may be, for example, a single plane mesh having a mesh size of from about 8 x 8 to about 100 x 100. The foraminous surface 32 may also be a multi-ply mesh having a mesh size from about 50 x 50 to about 200 x 200. In some embodiments, to further enhance the texture of the resulting fabric 36, the surface 32 may have a certain pattern. For example, one desirable mesh material may be obtained from Albany International under the designation FormTech 14 Wire. The wire may be described as a 14-C Flat Warp 14 x 13 mesh, single layer weave. The warp strands are 0.88 mm x 0.57 mm of polyester. The shute strands are 0.89 mm polyester. The average caliper is 0.057 inch and the open area is 27.8%.

The cellulosic fibrous layer 18 and nonwoven web 20 pass under one or more hydraulic entangling manifolds 34 and are treated with jets of fluid to entangle the cellulosic fibrous material with the fibers of the nonwoven web 20. Although not required, it is typically desired that the cellulosic fibrous layer 18 be between the nonwoven web 20 and the hydraulic entangling manifolds 34. The jets of fluid also drive cellulosic fibers into and through the nonwoven web 20 to form the composite fabric 36. Alternatively, hydraulic entangling may take place while the cellulosic fibrous layer 18 and nonwoven web 20 are on the same foraminous screen (e.g., mesh fabric) that the wet-laying took place. The present invention also contemplates superposing a dried cellulosic fibrous sheet on a nonwoven web, rehydrating the dried sheet to a specified consistency and then subjecting the rehydrated sheet to hydraulic entangling. The hydraulic entangling may take place while the cellulosic fibrous layer 18 is highly saturated with water. For example, the cellulosic fibrous layer 18 may contain up to about 90% by weight water just before hydraulic entangling. Alternatively, the cellulosic fibrous layer 18 may be an air-laid or dry-laid layer.

Hydraulic entangling may be accomplished utilizing conventional hydraulic entangling equipment such as described in, for example, in U.S. Pat. No. 3,485,706 to Evans. Hydraulic entangling may be carried out with any appropriate working fluid such as, for example, water. The working fluid flows through a manifold that evenly distributes the fluid to a series of individual holes or orifices. These holes or orifices may be from about 0.003 to about 0.015 inch in diameter and may be arranged in one or more rows with any number of orifices, e.g., 30-100 per inch, in each row. For example, a manifold produced by Honeycomb Systems Incorporated of Biddeford, Maine, containing a strip having 0.007-inch diameter orifices, 30 holes per inch, and 1 row of holes may be utilized. However, it should also be understood that many other manifold configurations and combinations may be used. For example, a single manifold may be used or several manifolds may be arranged in succession. Moreover, although not required, the fluid pressure typically used during hydroentangling ranges from about 1000 to about 3000 psig, and in some embodiments, from about 1200 to about 1800 psig. For instance, when processed at the upper ranges of the described pressures, the composite fabric 36 may be processed at speeds of up to about 1000 feet per minute (fpm).

Fluid may impact the cellulosic fibrous layer 18 and the nonwoven web 20, which are supported by a foraminous surface 32. As is typical in many water jet treatment processes, vacuum slots 38 may be located directly beneath the hydro-needling manifolds or beneath the foraminous entangling surface 32 downstream of the entangling manifold so that excess water is withdrawn from the hydraulically entangled composite material 36. Although not held to any particular theory of operation, it is believed that the columnar jets of working fluid that directly impact cellulosic fibers 18 laying on the nonwoven web 20 work to drive those fibers into and partially through the matrix or network of fibers in the web 20. When the fluid jets and cellulosic fibers 18 interact with a nonwoven web 20, the cellulosic fibers 18 are also entangled with fibers of the nonwoven web 20 and with each other. Besides entangling the fibers, the columnar jets of working fluid may also enhance the texture of the resulting fabric.

After the fluid jet treatment, the resulting composite fabric 36 may then be optionally dried using compressive (e.g., Yankee dryer) and/or non-compressive (e.g., through-air dry, infrared, microwave, etc.) drying techniques. Useful through-drying methods may be found in, for example, U.S. Patent Nos. 5,048,589 to Cook, et al.; 5,399,412 to Sudall, et al.; 5,510,001 to Hermans, et al.; 5,591,309 to Rugowski, et al.; and 6,017,417 to Wendt, et al.

In one particular embodiment, the composite fabric 36 is wet creped. For instance, as shown in Fig. 1, a differential speed pickup roll 40 may be used to transfer the fabric 36 from the hydraulic needling belt to a dryer drum 46 (e.g., Yankee dryer). Specifically, a support surface 50 (e.g., fabric or belt) carries the fabric 36 over the upper portion of the dryer drum 46. The support surface 50 may be patterned in some manner to enhance the texture of the resulting fabric 36. In some embodiments, for instance, the support surface 50 may be a contoured support fabric that contains from about 10 to about 200 machine-direction (MD) knuckles per inch (mesh) and from about 10 to about 200 cross-direction (CD) strands per inch (count). The diameter of such strands may, for example, be less than about 0.050 inches. Further, in some embodiments, the distance between the highest point of the MD knuckle and the highest point of the CD knuckle is from about 0.001 inches to about 0.03 inches. In between these two levels, knuckles may be formed by MD and/or CD strands that give the topography a three-dimensional peak/valley appearance that is ultimately imparted to the fabric 36. Some commercially available examples of such contoured support fabrics include, but are not limited to, Asten 934, 920, 52B, and Velostar V800 made by Asten Forming Fabrics, Inc. Other examples of such contoured fabrics may be described in U.S. Patent Nos. 6,017,417 to Wendt et al. and 5,492,598 to Hermans, et al.

While on the support surface 50, whether smooth or patterned, the fabric 36 is lightly pressed in engagement with a dryer drum 46 by a press roll 49 to which it adheres due to its moisture content and/or its preference for the smoother of two surfaces. Higher moisture contents may sometimes result in a more textured fabric. The moisture content may be from about 1 wt.% to about 20 wt.%. In some cases, a creping adhesive, such as described below, may be applied to the fabric 36 or drum surface 44 to enhance adhesion. The press roll 49 may be of made any of a variety of materials, such as of steel, aluminum, magnesium, brass, or hard urethane. In some embodiments, the surface of the press roll 49 may be controlled to enhance the texture of the resulting fabric. For example, the press roll 49 may have a patterned surface or be wrapped with a patterned fabric, as is well known in the art. The patterned surface may be utilized to impart peaks onto the "roll side" of the fabric 36, i.e., the side of the fabric 36 facing the roll 49. The press roll 49 may press the fabric 36 against the drum 46 at a variety of pressures. The roll pressure may be optimized to enhance the texture of the resulting fabric. When, for instance, the support surface 50 and/or roll 49 is patterned, the texture of the resulting fabric may be enhanced by using higher roll pressures to press the fabric 36 against the drum 46. Of course, the roll pressure may be set low enough to maintain the durability and strength of the fabric 36. For instance, in some embodiments, the roll pressure may be from about 50 pounds per linear inch (pli) to about 350 pli, in some embodiments from about 100 to about 300 pli, and in some embodiments, from about 150 to about 250 pli.

As the fabric 36 is carried over the drum surface 44, heat is imparted to the fabric 36, and most of the moisture is typically evaporated. The fabric 36 is then optionally removed from the drum surface 44 by a creping blade 47. That is, the blade 47 imparts a series of fine fold lines (crepe bars) to the portions of the fabric 36 that adhere to the creping surface 44. Of course, other creping techniques may also be utilized in the present invention. For example, in some embodiments, the fabric 36 may be creped using a "microcreping" process. For instance, some suitable microcreping processes are described in U.S. Patent Nos. 3,260,778 to Walton; 4,919,877 to Parsons, et al.; 5,102,606 to Ake, et al. ; 5,498,232 to Scholz; and 5,972,039 to Honeycutt, et al. Commercially available microcreping equipment may be obtained from Micrex Corporation of Walpole, Massachusetts.

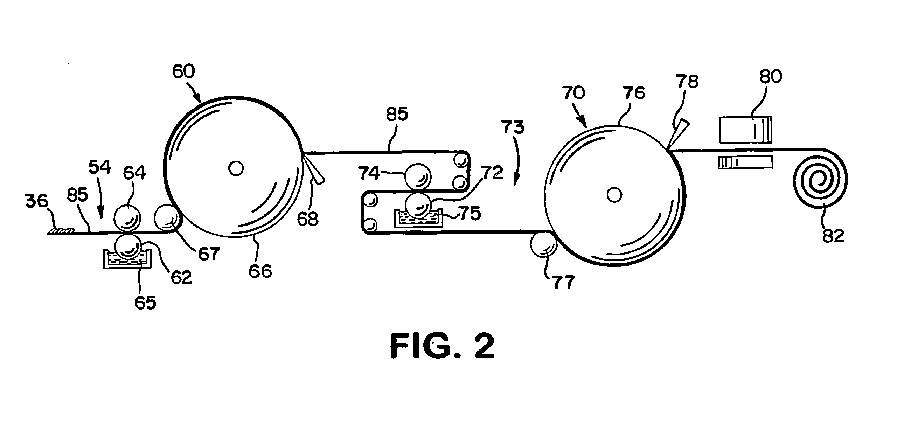

In addition to or in lieu of wet creping, the fabric may be subjected to a dry creping process (e.g., single recreping (SRC), double recreping (DRC), etc.). For example, some suitable dry creping techniques are described in U.S. Patent Nos. 3,879,257 to Gentile, et al.; 6,315,864 to Anderson, et al.; and 6,500,289 to Merker, et al. Referring to Fig. 2, for instance, one method for dry creping the fabric in accordance with the present invention is illustrated. As shown, the fabric 36 is disposed on a support surface 85, such as a wire or fabric. As described above, the support surface 85 may be smooth or patterned.

While on the support surface 85, the fabric 36 is passed through an adhesive application station 54. This station 54 includes a nip formed by a smooth rubber press roll 64 and a patterned metal rotogravure roll 62. The lower transverse portion of the rotogravure roll 62 is disposed in a bath 65 containing a creping adhesive. A wide variety of creping adhesives may be used in the present invention. For instance, some suitable adhesives that may be used include, but are not limited to, aqueous-based styrene butadiene adhesives, neoprene, polyvinyl chloride, vinyl copolymers, polyamides, ethylene vinyl terpolymers and combinations thereof. One particularly suitable adhesive is an acrylic polymer emulsion sold by Noveon, Inc. under the trade name HYCAR.

The percent adhesive coverage of the fabric 36 may be selected to obtain varying levels of creping, which may also result in varying levels of texture. For instance, greater adhesive coverage may result in a greater degree of creping, which in turn, results in a more textured material. Nonetheless, too high a degree of creping may sometimes reduce the strength of the fabric below desired levels. Thus, to balance these concerns, the adhesive coverage may be from about 5% to 95% of the fabric surface, in some embodiments from about 10% to about 70% of the fabric surface, and in some embodiments, from about 25% to about 50% of the fabric surface. The adhesive may also penetrate the fabric 36 in the locations where it is applied. In particular, the adhesive may penetrate through about 10% to about 50% of the fabric thickness, although there may be greater or less adhesive penetration at some locations.

Referring again to Fig. 2, the rotogravure roll 62 applies an engraved pattern of the creping adhesive to one surface of the fabric 36. The fabric 36 may optionally be passed through a drying station (not shown) where the adhesive is partially dried or set. The drying station may include any form of heating unit well known in the art, such as ovens energized by infrared heat, microwave energy, hot air, etc. The fabric 36 is then pressed into adhering contact with the creping drum 60 by the press roll 67. As described above, the pattern and/or pressure of the press roll 67 may be varied to optimize the texture of the resulting fabric 36. After being pressed against the drum 60, the fabric 36 is carried on the surface 66 of the drum 60 for a distance and then removed therefrom by the action of a creping blade 68.

The other side of the fabric 36 may be creped using a second creping station 73, regardless of whether or not the first creping station 54 is bypassed. The second adhesive application station 73 is illustrated by smooth rubber press roll 74, rotogravure roll 72, and a bath 75 containing a second adhesive. This adhesive is also applied to the fabric 36 in a pattern arrangement, although not necessarily in the same pattern as that in which the first adhesive is applied to the first side. Even if the two patterns are the same, it is not necessary to register the two patterns to each other. In addition, the same or different adhesive may be applied at the second adhesive application station 73. The rotogravure roll 72 applies an engraved pattern of the creping adhesive to one surface of the fabric 36. The fabric 36 is then pressed into adhering contact with the creping drum 70 by the press roll 77. After being pressed against the drum 70, the fabric 36 is carried on the surface 76 of the drum 70 for a distance and then removed therefrom by the action of a creping blade 78. After creping, the fabric may optionally be passed through a chilling station 80 and wound onto a storage roll 82 before being coated with the treatment composition.

The present inventors have discovered that the use of wet and/or dry creping may enhance the texture of the fabric by imparting a series of fold lines to the portions of the fabric that adhere to the creping surface. As indicated above, the level of texture imparted may be enhanced by controlling the level of adhesion and the pressure applied to the fabric. The textured effect may be further enhanced by selectively controlling the geometry of the creping blade and the amount of draw on the fabric after it is creped. In addition to providing texture to the fabric, creping may also cause any pulp fibers contained in the fabric to puff up and spread apart, thereby increasing softness and bulk. Creping may also enhance the stretchability of the web in the machine and/or cross-machine directions.

It may also be desirable to use other finishing steps and/or post treatment processes to impart selected properties to the fabric 36. For example, the fabric 36 may be lightly pressed by calender rolls, brushed or otherwise treated to enhance stretch and/or to provide a uniform exterior appearance and/or certain tactile properties. In one particular embodiment, the fabric 36 may be embossed in a finishing step to further enhance its texture. A pattern may be embossed into one side of the fabric or into both sides. For instance, the fabric may be impressed between a patterned or smooth press roll and an embossing roll containing a raised pattern.

The basis weight of the resulting textured fabric may range from about 20 to about 200 grams per square meter (gsm), in some embodiments from about 30 to about 175 grams per square meter, and in some embodiments, from about 50 gsm to about 150 gsm. Lower basis weight products are typically well suited for use as light duty wipers, while the higher basis weight products are better adapted for use as industrial wipers.

B. Treatment Composition

In some embodiments, the treatment composition is an aqueous composition that contains a curable latex polymer. Various examples of such a composition are described in U.S. Patent No. 5,853,859 to Levy, et al.. When applied to the fabric and dried, the treatment composition remains colorfast, even after exposure to many common cleaning chemicals. For instance, the coated fabric, when dried, may retain a colorfastness above 3 when exposed to liquids with a pH from about 2 to about 13.

The latex polymer of the treatment composition may be crosslinkable at room temperature or at slightly raised temperatures, stable at ambient weather conditions, and relatively flexible when cured. Example of such latex polymers include, but are not limited to, ethylene vinyl acetate polymers, ethylene vinyl chloride polymers, styrene-butadiene polymers, acrylate polymers, and styrene-acrylate copolymers, and so forth. Such latex polymers may have a glass transition temperature (Tg) in the range of from about -15°C to about +20°C. One suitable commercially available latex polymer is available from Noveon, Inc. of Cleveland, Ohio under the trade name HYCAR 26084. Other commercially available latex polymers include HYCAR 2671, 26445, 26322, 26684, and 26469 from Noveon, Inc.; RHOPLEX B-15, HA-8 and NW-1715 from Rohm & Haas; BUTOFAN 4261 and STYRONAL 4574 from BASF of Chattanooga, Tennessee.

A variety of cure promoters may be used in conjunction with the latex polymer. Although not required, the cure promoter may facilitate the crosslinking of the latex polymer in the composition. In some embodiments, the cure promoter may facilitate crosslinking at or slightly above room temperature so that the fabric is not heated above its melting temperature during curing. In one particular embodiment, the cure promoter becomes active at a pH that is neutral or acidic so that the composition is kept at a pH of above 8 during mixing and application. The pre-cure pH of the composition is kept above 8 by the use of a fugitive alkali, such as ammonia. Fugitive alkalis remain in solution until driven off by drying at room temperature, or alternatively, heating them a small amount to increase the evaporation rate. In any event, the curing temperature may be at a temperature below the melting temperature of the fabric. The loss of the alkali causes a drop in the pH of the composition that triggers the action of the cure promoter. Examples of some cure promoters that may be used in the present invention include, but are not limited to, XAMA-2, XAMA-7, and CX-100, which are available commercially from Noveon, Inc. of Cleveland, Ohio. Another suitable cure promoter is CHEMTITE PZ-33, which is available from the Nippon Shokubai Co. of Osaka, Japan. These materials are aziridine oligomers or polymers with at least two aziridine functional groups.

A pigment may also be used that is compatible with the latex polymer and cure promoter. A pigment may contain particulate color bodies as opposed to liquids. Some examples of commercially available pigments that may be used in the present invention include, but are not limited to, pigments available from Clariant Corp. of Charlotte, N.C., under the trade designation GRAPHTOL®. Particular pigments include GRAPHTOL 1175-2 (red), GRAPHTOL 6825-2 (blue), GRAPHTOL 5869-2 (green), and GRAPHTOL 4534-2 (yellow). Other suitable pigments include CATARENE Blue HC 153 Paste, CATARENE Red HC 269 Paste, and CATARENE Blue HC 740 Paste, which are also available from Clariant Corp. Combinations of these pigments may be used to provide various other colors.

In addition to or perhaps in place of some of the pigment, a filler such as clay may be used as an extender. A clay that may be used is, for example, ULTRAWHITE 90, available from the Englehard Corp. of Iselin, N.J. An optional viscosity modifier may also be used to decrease or increase the viscosity of the treatment composition. One such suitable viscosity-increasing modifier is known as ACRYSOL (RM-8) and is available from the Rohm & Haas Company of Philadelphia, Pennsylvania. Another suitable viscosity-increasing modifier is ZINPOL 520, an acrylic polymer available from Noveon, Inc. If it is desired to reduce the viscosity of the treatment composition, water may simply be added. The ability to add water is one indication of the ease of use and flexibility of this composition.

The amounts of each component used in the treatment composition may vary. For instance, the latex polymer may comprise from about 10 wt. % to about 45%, in some embodiments from about 20 wt.% to about 40 wt.%, and in some embodiments, from about 30 wt.% to about 40 wt.% of the treatment composition. In addition, the cure promoter may comprise from about 0.1 wt. % to about 10%, in some embodiments from about 0.5 wt.% to about 5 wt.%, and in some embodiments, from about 0.75 wt.% to about 2 wt.% of the treatment composition. The pigment may comprise from about 1 wt. % to about 20%, in some embodiments from about 2 wt.% to about 15 wt.%, and in some embodiments, from about 5 wt.% to about 10 wt.% of the treatment composition. As indicated above, the final viscosity of the composition may be adjusted with viscosity modifiers to provide the desired viscosity.

C. Application of Treatment Composition

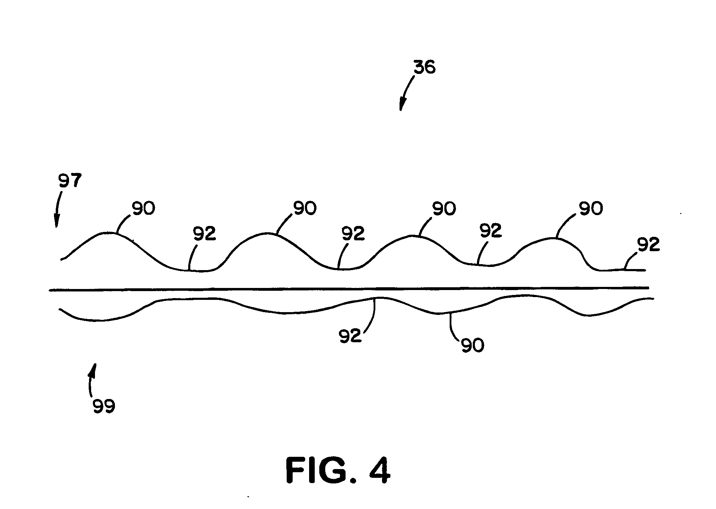

As indicated above, the textured fabric of the present invention contains peaks and valleys. More particularly, each side may possess peaks and valleys, although embodiments in which only one side contains peaks and valleys are certainly covered by the present invention. Referring to Fig. 4, for instance, one embodiment of a textured fabric 36 is shown that contains two surfaces 97 and 99, each having peaks 90 and valleys 92 disposed at a different elevation than the peaks 90. As illustrated, the peaks 90 define the user-contacting surfaces for the fabric 36. The valleys 92 do not come into contact with other surfaces during use. Because the peaks 90 contact various other surfaces (e.g., hands, counters, etc.) during use, fibers thereon may be freed from the fabric 36, thereby creating lint.

To reduce lint, the treatment composition is thus applied to the peaks 90 of the fabric 36. For example in some embodiments, greater than about 90%, and in some embodiments, approximately 100% of the peaks 90 are coated with the treatment composition. However, to maintain the absorbency of the fabric 36, it is also desired that that the valleys 92 remain free of the treatment composition, which may be hydrophobic. For example in some embodiments, less than about 10%, and in some embodiments, approximately 0% of the valleys 92 are coated with the treatment composition. To achieve such a coating distribution, 75 wt.% or greater, and in some embodiments, 90 wt.% or greater of the treatment composition is ultimately disposed on the peaks 90 of the textured fabric 36.

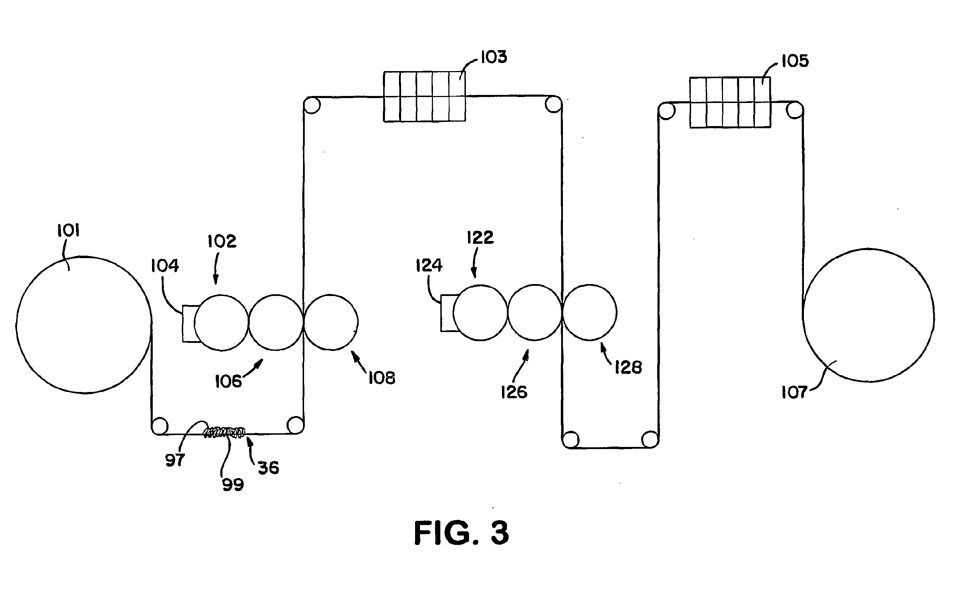

A variety of techniques may be used for applying the treatment composition to the peaks 90 of the fabric 36 in the above-described manner. Referring to Fig. 3, one embodiment of a flood coating process that may be used to apply the - treatment composition to the peaks 90 of the surfaces 97 and/or 99 of the fabric 36 (See Fig. 4) is illustrated. To flood coat the surface 97 of the fabric 36, for instance, the fabric 36 is unwound from a roll 101. Alternatively, the fabric 36 may be supplied directly from a drying or creping operation, such as discussed above. A first rotatable metering roll 102 dips into a bath 104 containing the treatment composition. Upon axial rotation, the metering roll 102 acquires the treatment composition from the bath 104, wherein continuous cells (not shown) of the metering roll 102 are filled. The roll 102 then transfers the treatment composition to a transfer roll 106. The fabric 36 passes through the gap between the transfer roll 106 having the treatment composition uniformly disposed thereon and an anvil roll 108. The peaks 90 of the fabric 36 project toward and contact the transfer roll 106.

As the fabric 36 passes through the gap between the transfer roll 106 and the anvil roll 108, the treatment composition is applied to only the peaks 90 of the fabric 36. The transfer roll 106 does not contact the valleys 92 of the fabric 36 that rest against the anvil roll 108. Accordingly, little or no treatment composition is applied to the valleys 92. Upon application, the treatment composition may be dried by a conventional dryer 103, which in some instances, drives off the alkali to cause a drop in the pH of the composition and activate the cure promoter. The treatment composition may also be flood coated onto the peaks 90 on the surface 99 of the fabric 36 using a second metering roll 122, a second bath 124, a second transfer roll 126, and a second anvil roll 128 in the manner described above. This additional treatment composition may also be dried using a dryer 105. The treated fabric 36 may then be wound up on a roll 107. Other suitable coating equipment and methods may also be described in U.S. Patent Nos. 5,085,514 to Mallik, et al.; 5,922,406 to Ludford, III; and 6,299,729 to Heath, et al.

In contrast to "pattern printing", which only coats a certain percentage of a surface, coating techniques, such as described above, may uniformly coat the entire user-contacting surface defined by the peaks 90. Moreover, to maintain the absorbency of the fabric 36, the valleys 92 remains substantially uncoated. This is accomplished because only the peaks 90 contact the transfer roll 106 during the coating process, and thus, the treatment composition is applied only to such peaks. Other techniques for uniformly coating a surface in this manner may also be utilized in the present invention. For instance, known gravure, offset, flexographic, and size press printing equipment may also be used in the present invention to apply a coating to an entire user-contacting surface.

The solids add-on level and depth percentage of the treatment composition may vary as desired. The "solids add-on level" is determined by subtracting the weight of the untreated fabric from the weight of the treated fabric (after drying), dividing this calculated weight by the weight of the uncoated fabric, and then multiplying by 100%. The depth percentage is determined by dividing the depth of the coating by the total caliper of the fabric (coated and uncoated), and multiplying by 100%. Lower add-on levels and depth percentages may provide optimum absorbency, while higher add-on levels and depth percentages may provide optimum lint reduction and durability. In some embodiments, for example, the add-on level is from about 0.1 % to about 20%, in some embodiments from about 0.1 % to about 10%, and in some embodiments, from about 0.5% to about 5%. In addition, the depth percentage of the coating may be from about 1% to about 30%, in some embodiments from about 1% to about 20%, and in some embodiments, from about 5% to about 15%.

The present invention may be better understood with reference to the following examples. The following test methods were used in the Examples.

Test Methods

Gelbo Lint: The amount of lint for a given sample was determined according to the Gelbo Lint Test. The Gelbo Lint Test determines the relative number of particles released from a fabric when it is subjected to a continuous flexing and twisting movement. It is performed in accordance with INDA test method 160.1-92. A sample is placed in a flexing chamber. As the sample is flexed, air is withdrawn from the chamber at 1 cubic foot per minute for counting in a laser particle counter. The particle counter counts the particles by size for less than or greater than 25 microns using channels to size the particles. The results may be reported as the total particles counted over 10 consecutive 30-second periods, the maximum concentration achieved in one of the ten counting periods or as an average of the ten counting periods. The test indicates the lint generating potential of a material.

Taber Abrasion resistance: Taber Abrasion resistance measures the abrasion resistance in terms of destruction of the fabric produced by a controlled, rotary rubbing action. Abrasion resistance is measured in accordance with Method 5306, Federal Test Methods Standard No. 191A, except as otherwise noted herein. Only a single wheel is used to abrade the specimen. A 12.7 x 12.7-cm specimen is clamped to the specimen platform of a Taber Standard Abrader (Model No. 504 with Model No. E-140-15 specimen holder) having a rubber wheel (No. H-18) on the abrading head and a 500-gram counterweight on each arm. The loss in breaking strength is not used as the criteria for determining abrasion resistance. The results are obtained and reported in abrasion cycles to failure where failure was deemed to occur at that point where a 1.25-cm hole is produced within the fabric.

Absorption Capacity: The absorption capacity refers to the capacity of a material to absorb liquid over a period of time and is related to the total amount of liquid held by the material at its point of saturation. The absorption capacity is measured in accordance with Federal Specification No. UU-T-595C on industrial and institutional towels and wiping papers. Specifically, absorption capacity is determined by measuring the increase in the weight of the sample resulting from the absorption of a liquid and is expressed, in percent, as the weight of liquid absorbed divided by the weight of the sample by the following equation:

$$\text{Absorption Capacity} = [(\text{saturated sample weight} - \text{sample weight}) / \text{sample weight}] \times 100.$$

Colorfastness: Colorfastness refers to the transfer of a colored material from a sample as determined by a colorfastness to crocking test. Colorfastness to crocking is measured by placing a 5-inch x 7-inch (127 mm by 178 mm) piece of the sample into a Crockmeter model available from the Atlas Electric Device Company of Chicago, Illinois. The crockmeter strokes or rubs a cotton cloth back and forth across the sample a predetermined number of times (in the tests herein the number was 30) with a fixed amount of force. The color transferred from the sample onto the cotton is then compared to a scale wherein 5 indicates no color on the cotton and 1 indicates a large amount of color on the cotton. A higher number indicates a more colorfast sample. The comparison scale is available from the American Association of Textile Chemists and Colorists (AATCC), Research Triangle Park, NC.

Grab Tensile Strength: The grab tensile test is a measure of breaking strength of a fabric when subjected to unidirectional stress. This test is known in the art and conforms to the specifications of Method 5100 of the Federal Test Methods Standard 191A. The results are expressed in pounds to break. Higher numbers indicate a stronger fabric. The grab tensile test uses two clamps, each having two jaws with each jaw having a facing in contact with the sample. The clamps hold the material in the same plane, usually vertically, separated by 3 inches (76 mm) and move apart at a specified rate of extension. Values for grab tensile strength are obtained using a sample size of 4 inches (102 mm) by 6 inches (152 mm), with a jaw facing size of 1 inch (25 mm) by 1 inch, and a constant rate of extension of 300 mm/min. The sample is wider than the clamp jaws to give results representative of effective strength of fibers in the clamped width combined with additional strength contributed by adjacent fibers in the fabric. The specimen is clamped in, for example, a Sintech 2 tester, available from the Sintech Corporation of Cary, N.C., an Instron Model TM, available from the Instron Corporation of Canton, Mass., or a Thwing-Albert Model INTELLECT II available from the Thwing-Albert Instrument Co. of Philadelphia, Pa. This closely simulates fabric stress conditions in actual use. Results are reported as an average of three specimens and may be performed with the specimen in the cross direction (CD) or the machine direction (MD).

## EXAMPLE 1

A composite fabric was formed to have peaks and valleys according to U.S. Patent No. 5,284,703 to Everhart, et al. Specifically, northern softwood kraft pulp fibers were deposited onto an Albany 84M forming wire available from Albany International, and hydraulically entangled with a polypropylene spunbond web (basis weight of 27 grams per square meter) with entangling pressures of up to about 1600 pounds per square inch 1.1 x 10$^7$ Pa. The entangling wire was Form Tech 14 available from Albany International. After entangling, the fabric was transferred to a drying fabric available from Albany International under the name "Aerogrip" and dried with drying cans (at a temperature of 250°F) 121°C so that it reached a maximum temperature of 200°F (93°C).

The fabric was then transferred to a Yankee wire available from Albany International under the name "Monodri 1", adhered to a Yankee drum, and creped. The adhesive used was an ethylene/vinyl acetate copolymer latex adhesive available from Air Products, Inc. under the name "Airflex A-105" (viscosity of 95 cps and 28% solids). A roll pressed the fabric against the Yankee drum at a pressure of 200 pounds per linear inch 1.38x10$^6$ Pa. The creping blade holder angle was 21° and the grind angle was 20°. The resulting fabric had a basis weight of about 125 grams per square meter, and contained approximately 40% by weight of the spunbond web and approximately 60% of the pulp fiber component.

The following composition was then applied to the fabric:

**Table 1: Treatment Composition**

| Components | Wt. % |
|---|---|
| Hycar 26684[1] | 27.40 |
| BubbleBreaker 748[2] | 0.13 |
| 28% Ammonia | 0.53 |
| Zinpol 520[3] | 31.23 |
| GRAPHTOL Red 1116-2ps | 1.10 |
| GRAPHTOL Blue 6825-2ps | 3.29 |
| XAMA-7[4] | 0.82 |
| Water | 35.51 |

[1] An acrylic latex polymer available from Noveon, Inc.
[2] A defoamer available from CK Witco, Inc.
[3] An acrylic thickener available from Noveon, Inc.
[4] A polyfunctional aziridine cure promoter available from Noveon, Inc.

The composition was prepared by adding the indicated amount of latex polymer as an aqueous mixture with a fugitive alkali, in this case ammonia, to a pH of about 9. The indicated amount of pigment was then added and the pH rechecked and adjusted if necessary. Lastly, the cure promoter was added and the viscosity was checked and adjusted with the viscosity modifier, to a final pre-cure viscosity of 75 centipoise. The composition had a solids add-on level of 1.0%.

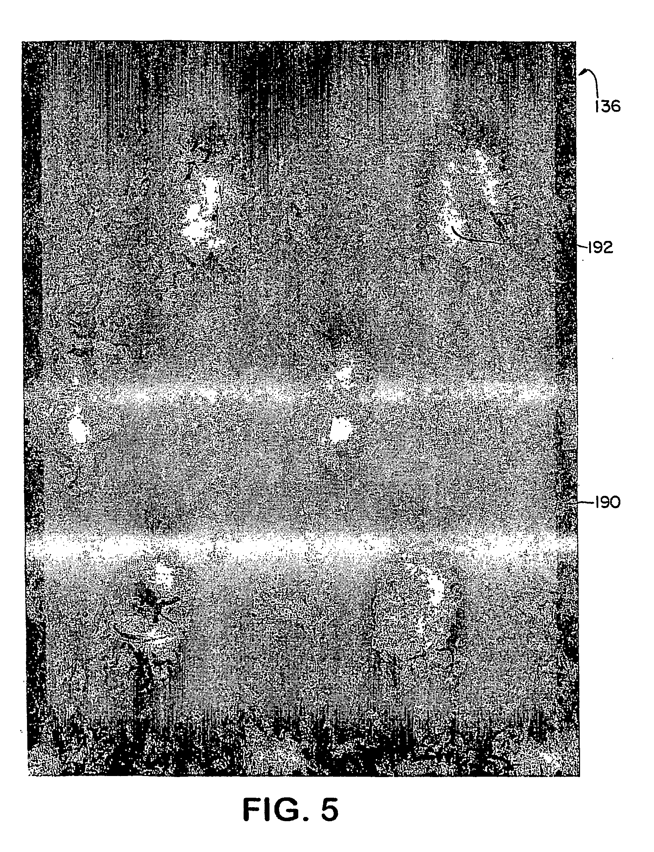

To apply the composition, the flood coating technique shown in Fig. 3 was utilized. The metering rolls (e.g., roll 102 and roll 122) were engraved analox rolls having 300 cells (lines) per inch of their surface. The first metering roll (e.g., roll 102) had a Shore A hardness of 55 and a cell volume of 6.9 BCM (billion cubic micrometers), while the second metering roll (e.g., roll 122) had a Shore A hardness of 65 and a cell volume of 6.9 BCM. A microphotograph of one side of the coated fabric is shown in Fig. 5. As depicted, the fabric 136 contains peaks 190 and valleys 192. The lighter shade of the valleys 192 evidences the absence of the treatment composition, while the darker shade of the peaks 190 evidences the presence of the composition.

Upon formation, the absorbent capacity and colorfastness of the fabric was tested as set forth above. To measure colorfastness, samples of the fabric were dipped into the subject solutions and allowed to remain in the solution for 5 minutes. Each sample was then removed from the solution and placed in the crockmeter while still wet and tested according to the test procedure. In addition, a sample coated with the treatment composition using "pattern printing" was also tested. For this sample, the composition was printed onto both sides the fabric using flexographic printing and dried at room temperature. The printing applied a solids add-on level of 0.4% to each side with about 48% print coverage.

The results are shown below in Table 2.

**Table 2: Test Results for 125 GSM Fabric**

| Sample | Absorption Capacity (%) | | Colorfastness |
|---|---|---|---|
| Flood Coated | Water | 4.4 | N/A |
| | Windex® | 2.5 | 2.0 |
| | Cooking Oil | 4.9 | N/A |
| 2-Side Pattern Printed | Water | 4.1 | N/A |
| | Windex® | 2.3 | 2.0 |
| | Cooking Oil | 4.2 | N/A |

As indicated above, the absorbent capacity and colorfastness was not substantially reduced when using the flood coating technique.

## EXAMPLE 2

A composite fabric was formed to have peaks and valleys substantially as described above in Example 1, except that the resulting fabric had a total basis weight of 82 grams per square meter. The following composition was then applied to the fabric:

**Table 3: Treatment Composition**

| Components | Wt. % |
|---|---|
| Hycar 26684[1] | 32.98 |
| BubbleBreaker 748[2] | 0.16 |
| 28% Ammonia | 0.63 |
| Zinpol 520[3] | 21.58 |
| CATARENE Red HC 269 Paste | 9.13 |
| XAMA-7[4] | 1.89 |
| Water | 33.62 |
| [1] An acrylic latex polymer available from Noveon, Inc. [2] A defoamer available from CK Witco, Inc. [3] An acrylic thickener available from Noveon, Inc. [4] A polyfunctional aziridine cure promoter available from Noveon, Inc. | |

The composition was prepared by adding the indicated amount of latex polymer as an aqueous mixture with a fugitive alkali, in this case ammonia, to a pH of about 9. The indicated amount of pigment was then added and the pH rechecked and adjusted if necessary. Lastly, the cure promoter was added and the viscosity was checked and adjusted with the viscosity modifier, to a final precure viscosity of 75 centipoise. The composition was applied using the flood coating technique of Example 1. The solids add-on level was 1.8%.

Various properties of the fabric were then tested as set forth above. In addition, a sample coated with the treatment composition using "pattern printing" was also tested. For this sample, the composition was printed onto both sides the fabric using flexographic printing and dried at room temperature. The printing applied a solids add-on level of 0.7% to each side with about 48% print coverage. Another sample was also tested that contained no treatment composition.

The results are shown below in Table 4.

**Table 4: Test Results for 82 GSM Fabric**

| Sample | Colorfastness | | MD Grab Tensile Strength (lbs) | CD Grab Tensile Strength (lbs) | Taber Abrasion Resistance (cycles) | Gelbo Lint | | Water Absorption Capacity (%) |
|---|---|---|---|---|---|---|---|---|
| | | | | | | <25 microns | > 25 microns | |
| Flood Coated | Encompass™ | 3.0 | 17.3 | 13.4 | 61.4 | 208 | 26 | 3.9 |
| | Disinfectant | 2.0 | | | | | | |
| | Windex™ | 2.0 | | | | | | |
| | Fantistik™ | 2.0 | | | | | | |
| | Vinegar | 2.0 | | | | | | |
| | Bleach | 3.0 | | | | | | |
| 2-Side Pattern Printed | Encompass™ | 3.5 | 19.1 | 13.1 | 64.8 | 250 | 51 | 4.2 |
| | Disinfectant | 3.0 | | | | | | |
| | Windex™ | 3.5 | | | | | | |
| | Fantistik™ | 4.0 | | | | | | |
| | Vinegar | 3.5 | | | | | | |
| | Bleach | 4.0 | | | | | | |
| Uncoated | N/A | | 16.8 | 12.1 | 67.4 | 260 | 55 | 4.6 |

As indicated above, the flood coated sample exhibited relatively low levels of lint while substantially maintaining its other properties.

## EXAMPLE 3

A composite fabric was formed to have peaks and valleys substantially as described above in Example 1, except that the resulting fabric had a total basis weight of 54 grams per square meter. The following composition was then applied to the fabric:

**Table 5: Treatment Composition**

| Components | Wt. % |
|---|---|
| Hycar 26684[1] | 27.40 |
| BubbleBreaker 748[2] | 0.13 |
| 28% Ammonia | 0.53 |
| Zinpol 520[3] | 31.23 |
| GRAPHTOL Red 1116-2ps | 1.10 |
| GRAPHTOL Blue 6825-2ps | 3.29 |
| XAMA-7[4] | 0.82 |
| Water | 35.51 |
| [1] An acrylic latex polymer available from Noveon, Inc. [2] A defoamer available from CK Witco, Inc. [3] An acrylic thickener available from Noveon, Inc. [4] A polyfunctional aziridine cure promoter available from Noveon, Inc. | |

The composition was prepared by adding the indicated amount of latex polymer as an aqueous mixture with a fugitive alkali, in this case ammonia, to a pH of about 9. The indicated amount of pigment was then added and the pH rechecked and adjusted if necessary. Lastly, the cure promoter was added and the viscosity was checked and adjusted with the viscosity modifier, to a final pre-cure viscosity of 75 centipoise. The composition was applied using the flood coating technique of Example 1. The solids add-on level was approximately 1.8%.

Various properties of the fabric were then tested as set forth above. In addition, a sample coated with the treatment composition using "pattern printing" was also tested. For this sample, the composition was printed onto both sides the fabric using flexographic printing and dried at room temperature. The printing applied a solids add-on level of 0.7% to each side with about 48% print coverage. Another sample was also tested that contained no treatment composition.

The results are shown below in Table 6.

**Table 6: Test Results for 54 GSM Fabric**

| Sample | Gelbo Lint | | Water Absorption Capacity (%) |
|---|---|---|---|
| | < 25 microns | > 25 microns | |
| Flood Coated | 77.2 | 15.2 | 4.3 |
| 2-Side Pattern Printed | 58.2 | 12.8 | 4.5 |
| Uncoated | 159.2 | 28.8 | 5.1 |

As indicated above, the flood coated sample exhibited relatively low levels of lint while substantially maintaining its water absorption capacity.

## EXAMPLE 4

A composite fabric was formed to have peaks and valleys substantially as described above in Example 1, except that the resulting fabric had a total basis weight of 54 grams per square meter. The following composition was then applied to the fabric:

**Table 7: Treatment Composition**

| Components | Wt. % |
|---|---|
| Hycar 26684[1] | 32.98 |
| BubbleBreaker 748[2] | 0.16 |
| 28% Ammonia | 0.63 |
| Zinpol 520[3] | 21.58 |
| CATARENE Blue HC 153 Paste | 9.13 |
| XAMA-7[4] | 1.89 |
| Water | 33.62 |
| [1] An acrylic latex polymer available from Noveon, Inc. [2] A defoamer available from CK Witco, Inc. [3] An acrylic thickener available from Noveon, Inc. [4] A polyfunctional aziridine cure promoter available from Noveon, Inc. | |

The composition was prepared by adding the indicated amount of latex polymer as an aqueous mixture with a fugitive alkali, in this case ammonia, to a pH of about 9. The indicated amount of pigment was then added and the pH rechecked and adjusted if necessary. Lastly, the cure promoter was added and the viscosity was checked and adjusted with the viscosity modifier, to a final pre-cure viscosity of 75 centipoise. The composition was applied using the flood coating technique of Example 1. The solids add-on level was approximately 2.8%.

Various properties of the fabric were then tested as set forth above. In addition, a sample coated with the treatment composition using "pattern printing" was also tested. For this sample, the composition was printed onto both sides the fabric using flexographic printing and dried at room temperature. The printing applied a solids add-on level of 1.41 to each side with about 48% print coverage.

The results are shown below in Table 8.

**Table 8: Test Results for 54 GSM Fabric**

| Sample | Colorfastness (Windex™) | Absorption Capacity (%) | |
|---|---|---|---|
| Flood Coated | 1.5 | Water | 4.7 |
| | | Windex™ | 4.2 |
| | | Cooking Oil | 6.6 |
| 2-Side Pattern Printed | 1.0 | Water | 5.1 |
| | | Windex™ | 4.5 |
| | | Cooking Oil | 7.2 |

As indicated above, the flood coated sample was able to exhibit low colorfastness and substantially maintain its absorption capacity.

While the invention has been described in detail with respect to the specific embodiments thereof, it will be appreciated that those skilled in the art, upon attaining an understanding of the foregoing, may readily conceive of alterations to, variations of, and equivalents to these embodiments. Accordingly, the scope of the present invention should be assessed as that of the appended claims and any equivalents thereto.

**Claims**

1. A textured fabric that comprises a nonwoven web (20) hydraulically entangled with a fibrous component (18), at least a portion of the fabric being creped, said fabric having at least one surface (97, 99) that contains peaks (90) and valleys (92), **characterized in that** greater than about 90% of said peaks and less than about 10% of said valleys are disposed with a treatment composition, said treatment composition comprising a latex polymer.

2. A textured fabric as defined in claim 1, wherein approximately 100% of said peaks (90) are disposed with said treatment composition.

3. A textured fabric as defined in claim 1, wherein approximately 0% of said valleys (92) are disposed with said treatment composition.

4. A textured fabric as defined in claim 1, 2 or 3, wherein the solids add-on level of said treatment composition is from about 0.1% to about 20%, preferably from about 0.5% to about 5%.

5. A textured fabric as defined in any preceding claim, wherein said latex polymer is selected from the group consisting of ethylene vinyl acetates, ethylene vinyl chlorides, styrene-butadiene, acrylates and styrene-acrylate copolymers.

6. A textured fabric as defined in any preceding claim, wherein said nonwoven web (20) is a spunbond web.

7. A textured fabric as defined in any preceding claim, wherein the textured fabric is a nonwoven laminate.

8. A textured fabric as defined in any preceding claim, wherein said fibrous component contains cellulosic fibers.

9. A textured fabric as defined in claim 8, wherein said fibrous component comprises greater than about 50% by weight of the textured fabric, preferably from about 60% to about 90% by weight of the textured fabric.

10. A textured nonwoven fabric as defined in any preceding claim, wherein said treatment composition further comprises a pigment.

11. A textured composite fabric as claimed in claim 7, 8, 9 or 10, wherein the nonwoven web is hydraulically entangled with pulp fibers, the treatment comprising a crosslinked latex polymer.

12. A textured composite fabric as defined in claim 11, wherein said pulp fibers comprise greater than about 50% by weight of the textured fabric, preferably from about 60% to about 90% by weight of the textured fabric.

13. A method for forming a product that generates relatively low levels of lint, said method comprising:

> forming a fabric that comprises a nonwoven web (20);
> hydraulically entangled the nonwoven web with a fibrous component (18);
> creping the fabric;

wherein the creped fabric has peaks (90) and valleys (92);
**characterized by** coating said fabric with a treatment composition that comprises a crosslinkable latex polymer so that greater than about 90% of said peaks and less than about 10% of said valleys contain said treatment composition.

14. A method as defined in claim 13, wherein approximately 100% of said peaks contain said treatment composition.

15. A method as defined in claim 13, wherein approximately 0% of said valleys contain said treatment composition.

16. A method as defined in claim 13, 14 or 15, wherein the solids add-on level of said treatment composition is from about 0.5% to about 5%.

17. A method as defined in any of claims 13 to 16, wherein said treatment composition is an aqueous composition that further comprises a cure promoter and a pigment.

18. A method as defined in claim 17, wherein said cure promoter is an aziridine oligomer with at least two aziridine functional groups.

19. A method as defined in any of claims 13 to 18, wherein said treatment composition has a pre-cure pH that is adjusted to above 8 using a fugitive alkali.

20. A method as defined in any of claims 13 to 19, wherein said latex polymer is crosslinkable at room temperature.

21. A method as defined in any of claims 13 to 20, wherein said crosslinkable latex polymer comprises a polymer selected from the group consisting of ethylene vinyl acetates, ethylene vinyl chlorides, styrene-butadiene, acrylates and styrene-acrylate copolymers.

22. A method as defined in any of claims 13 to 21, wherein said nonwoven web (20) is a spunbond web.

23. A method as defined in any of claims 13 to 22, wherein said fibrous component comprises greater than about 50% by weight of said fabric.

24. A method as defined in claim 23, wherein said fibrous component comprises from about 60% to about 90% by weight of said fabric.

25. A method as defined in claim 23 or 24, wherein said fibrous component contains cellulosic fibers.

26. A method as defined in any of claims 13 to 25, comprising adhering said fabric to a creping surface (44) and creping said fabric therefrom, wherein said creped fabric has at least one surface that contains peaks and valleys.

27. A method as defined in claim 26, wherein said fabric is supported by a patterned surface during creping.

28. A method as defined in claim 27, wherein said fabric is pressed into engagement with said creping surface at a pressure of from about 50 to about 350 pounds per linear inch (8.9 to 62.3 kg/cm), preferably from about 150 to about 250 pounds per linear inch (26.7 to 44.5 kg/cm).

29. A method as defined in claim 27 or 28, wherein a creping adhesive is used to facilitate the adherence of said fabric to said creping surface.

**Patentansprüche**

1. Texturiertes Tuch, das ein Vliestuch (20) enthält, das hydraulisch mit einer fasrigen Komponente (18) verfitzt ist, wobei wenigstens ein Abschnitt des Tuchs gekreppt ist und das Tuch wenigstens eine Oberfläche (97, 99) hat, die Erhebungen (90) und Vertiefungen (92) aufweist, **dadurch gekennzeichnet, dass** mehr als etwa 90% der Erhebungen und weniger als etwa 10% der Vertiefungen mit einer Behandlungszusammensetzung versehen sind, wobei die Behandlungszusammensetzung ein Latexpolymer enthält.

2. Texturiertes Tuch nach Anspruch 1, bei dem etwa 100% der Erhebungen (90) mit der Behandlungszusammensetzung versehen sind.

3. Texturiertes Tuch nach Anspruch 1, bei dem etwa 0% der Vertiefungen (92) mit der Behandlungszusammensetzung versehen sind.

4. Texturiertes Tuch nach Anspruch 1, 2 oder 3, bei dem der Festkörperzugabegehalt der Behandlungszusammensetzung im Bereich von etwa 0,1% bis etwa 20%, vorzugsweise im Bereich von etwa 0,5% bis etwa 5% liegt.

5. Texturiertes Tuch nach einem der vorhergehenden Ansprüche, bei dem das Latexpolymer aus der Gruppe gewählt ist, die aus Ethylenvinylazetaten, Ethylenvinylchloriden, Styrenbutadien, Acrylaten und Styrenacrylat-Copolymeren besteht.

6. Texturiertes Tuch nach einem der vorhergehenden Ansprüche, bei dem die Vliesbahn (20) eine Spunbond-Bahn ist.

7. Texturiertes Tuch nach einem der vorhergehenden Ansprüche, bei dem das texturierte Tuch ein Vlieslaminat ist.

8. Texturiertes Tuch nach einem der vorhergehenden Ansprüche, bei dem die fasrige Komponente Zellulosefasern enthält.

9. Texturiertes Tuch nach Anspruch 8, bei dem die fasrige Komponente mehr als etwa 50 Gewichtsprozent des texturierten Tuchs, vorzugsweise jedoch etwa zwischen 60 und etwa 90 Gewichtsprozent des texturierten Tuchs enthält.

10. Texturiertes Vliestuch nach einem der vorhergehenden Ansprüche, bei dem die Behandlungszusammensetzung weiterhin ein Pigment enthält.

11. Texturiertes Tuch nach Anspruch 7, 8, 9 oder 10, bei dem die Vliesbahn hydraulisch mit Pulpefasern verfitzt ist, wobei die Behandlungszusammensetzung ein vernetztes Latexpolymer enthält.

12. Texturiertes Verbundtuch nach Anspruch 11, bei dem die Pulpefasern mehr als etwa 50 Gewichtsprozent des texturierten Tuchs, vorzugsweise etwa 60 bis 90 Gewichtsprozent des texturierten Tuchs enthalten.

13. Verfahren zum Ausbilden eines Produktes, das einen relativ geringen Gehalt von Flusen erzeugt, wobei das Verfahren umfasst:

    Ausbilden eines Tuchs, das eine Vliesbahn (20) enthält;
    hydraulisches Verfitzen der Vliesbahn mit einer fasrigen Komponente (18);
    Kreppen des Tuchs;

    wobei das gekreppte Tuch Erhebungen (90) und Vertiefungen (92) aufweist;
    **gekennzeichnet durch** Beschichten des Tuchs mit einer Behandlungszusammensetzung, die ein vernetzbares Latexpolymer enthält, derart, dass mehr als 90% der Erhebungen und weniger als 10% der Vertiefungen die Behandlungszusammensetzung enthalten.

14. Verfahren nach Anspruch 13, bei dem etwa 100% der Erhebungen die Behandlungszusammensetzung enthalten.

15. Verfahren nach Anspruch 13, bei dem etwa 0% der Vertiefungen die Behandlungszusammensetzung enthalten.

**16.** Verfahren nach Anspruch 13, 14 oder 15, bei dem der Festkörperzugabegehalt der Behandlungszusammensetzung im Bereich von etwa 0,5% bis etwa 5% liegt.

**17.** Verfahren nach einem der Ansprüche 13 bis 16, bei dem die Behandlungszusammensetzung eine wässrige Zusammensetzung ist, die zudem einen Aushärtungspromoter und ein Pigment enthält.

**18.** Verfahren nach Anspruch 17, bei dem der Aushärtungspromoter ein Aziridin-Oligomer mit wenigstens zwei Aziridin-Funktionsgruppen ist.

**19.** Verfahren nach einem der Ansprüche 13 bis 18, bei dem die Behandlungszusammensetzung einen Vorhärtungs-PH-Wert hat, der mit Hilfe eines flüchtigen Alkalis auf über 8 eingestellt ist.

**20.** Verfahren nach einem der Ansprüche 13 bis 19, bei dem das Latexpolymer bei Raumtemperatur vernetzbar ist.

**21.** Verfahren nach einem der Ansprüche 13 bis 20, bei dem das vernetzbare Latexpolymer ein Polymer enthält, das aus der Gruppe gewählt ist, die aus Ethylenvinylazetaten, Ethylenvinylchloriden, Styrenbutadien, Acrylaten und Styrenacrylat-Copolymeren besteht.

**22.** Verfahren nach einem der Ansprüche 13 bis 21, bei dem die Vliesbahn (20) eine Spunbond-Bahn ist.

**23.** Verfahren nach einem der Ansprüche 13 bis 22, bei dem die fasrige Komponente mehr als etwa 50 Gewichtsprozent des Tuchs enthält.

**24.** Verfahren nach Anspruch 23, bei dem die fasrige Komponente etwa 60 bis etwa 90 Gewichtsprozent des Tuchs enthält.

**25.** Verfahren nach Anspruch 23 oder 24, bei dem die fasrige Komponente Zellulosefasern enthält.

**26.** Verfahren nach einem der Ansprüche 13 bis 25, umfassend das Ankleben des Tuchs an eine Kreppoberfläche (44) und Kreppen des Tuchs daraus, wobei das gekreppte Tuch wenigstens eine Oberfläche aufweist, die Erhebungen und Vertiefungen hat.

**27.** Verfahren nach Anspruch 26, bei dem das Tuch während des Kreppens von einer gemusterten Oberfläche getragen wird.

**28.** Verfahren nach Anspruch 27, bei dem das Tuch bei einem Druck von etwa 50 bis etwa 350 Pfund pro Linearzoll (8,9 bis 62,3 kg/cm), vorzugsweise von etwa 150 bis etwa 250 Pfund pro Linearzoll (26,7 bis 44,5 kg/cm), in Eingriff mit der Kreppoberfläche gedrückt wird.

**29.** Verfahren nach Anspruch 27 oder 28, bei dem ein Krepphaftmittel verwendet wird, um das Haften des Tuchs an der Kreppoberfläche zu erleichtern.

**Revendications**

**1.** Etoffe texturée qui comprend un voile non-tissé (20) hydrolié avec un composant fibreux (18), au moins une portion de l'étoffe étant crêpée, ladite étoffe ayant au moins une surface (97,99) qui contient des pics (90) et des vallées (92), **caractérisée en ce que** plus d'environ 90 % desdits pics et moins d'environ 10 % desdites vallées sont disposés au moyen d'une composition de traitement, ladite composition de traitement comprenant un polymère de latex.

**2.** Etoffe texturée telle que définie dans la revendication 1, dans laquelle approximativement 100 % desdits pics (90) sont disposés au moyen de ladite composition de traitement.

**3.** Etoffe texturée telle que définie dans la revendication 1, dans laquelle approximativement 0 % desdites vallées (92) sont disposées au moyen de ladite composition de traitement.

**4.** Etoffe texturée telle que définie dans les revendications 1, 2 ou 3, dans laquelle le niveau d'adjonction en solides de ladite composition de traitement va d'environ 0,1 % à environ 20 %, de préférence d'environ 0,5 % à environ 5 %.

5. Etoffe texturée telle que définie dans l'une quelconque des revendications précédentes, dans laquelle ledit polymère de latex est sélectionné dans le groupe consistant en les éthylène-acétate de vinyle, les éthylène-chlorure de vinyle, le styrène-butadiène, les acrylates et les copolymères styrène-acrylates.

6. Etoffe texturée telle que définie dans l'une quelconque des revendications précédentes, dans laquelle ledit voile non-tissé (20) est un voile obtenu par filage-nappage.

7. Etoffe texturée telle que définie dans l'une quelconque des revendications précédentes, l'étoffe texturée étant un laminé non-tissé.

8. Etoffe texturée telle que définie dans l'une quelconque des revendications précédentes, dans laquelle ledit composant fibreux contient des fibres cellulosiques.

9. Etoffe texturée telle que définie dans la revendication 8, dans laquelle ledit composant fibreux représente plus d'environ 50 % en poids de l'étoffe texturée, de préférence entre environ 60 % et environ 90 % en poids de l'étoffe texturée.

10. Etoffe texturée non-tissée telle que définie dans l'une quelconque des revendications précédentes, dans laquelle ladite composition de traitement comprend, en outre, un pigment.

11. Etoffe texturée composite telle que définie dans la revendication 7, 8, 9 ou 10, dans laquelle le voile non-tissé est hydrolié avec des fibres de pâte, le traitement comprenant un polymère de latex réticulé.

12. Etoffe texturée composite telle que définie dans la revendication 11, dans laquelle lesdites fibres de pâte représentent plus d'environ 50 % en poids de l'étoffe texturée, de préférence entre environ 60 % et environ 90 % en poids de l'étoffe texturée.

13. Procédé de formation d'un produit qui génère des niveaux relativement bas de peluches, ledit procédé comprenant :

la formation d'une étoffe qui comprend un voile non-tissé (20) ;
l'hydroliage du voile non-tissé avec un composant fibreux (18) ;
le crêpage de l'étoffe ;
l'étoffe crêpée ayant des pics (90) et des vallées (92) ;

**caractérisé par** l'enduction de ladite étoffe au moyen d'une composition de traitement qui comprend un polymère de latex réticulable de telle sorte que plus d'environ 90 % desdits pics et moins d'environ 10 % desdites vallées contiennent ladite composition de traitement.

14. Procédé tel que défini dans la revendication 13, dans lequel approximativement 100 % desdits pics contiennent ladite composition de traitement.

15. Procédé tel que défini dans la revendication 13, dans lequel approximativement 0 % desdites vallées (92) contiennent ladite composition de traitement.

16. Procédé tel que défini dans la revendication 13, 14 ou 15, dans lequel le niveau d'adjonction en solides de ladite composition de traitement va d'environ 0,5 % à environ 5 %.

17. Procédé tel que défini dans l'une quelconque des revendications 13 à 16, dans lequel ladite composition de traitement est une composition aqueuse qui comprend, en outre, un promoteur de durcissement et un pigment.

18. Procédé tel que défini dans la revendication 17, dans lequel ledit promoteur de durcissement est un oligomère d'aziridine ayant au moins deux groupes fonctionnels aziridine.

19. Procédé tel que défini dans l'une quelconque des revendications 13 à 18, dans lequel ladite composition de traitement a un pH pré-durcissement qui est réglé à plus de 8 en utilisant un agent alcalin fugace.

**20.** Procédé tel que défini dans l'une quelconque des revendications 13 à 19, dans lequel ledit polymère de latex est polymérisable à la température ambiante.

**21.** Procédé tel que défini dans l'une quelconque des revendications 13 à 20, dans lequel ledit polymère de latex réticulable comprend un polymère sélectionné dans le groupe consistant en les éthylène-acétate de vinyle, les éthylène-chlorure de vinyle, le styrène-butadiène, les acrylates et les copolymères styrène-acrylate.

**22.** Procédé tel que défini dans l'une quelconque des revendications 13 à 21, dans lequel ledit voile non-tissé (20) est un voile obtenu par filage-nappage.

**23.** Procédé tel que défini dans l'une quelconque des revendications 13 à 22, dans lequel ledit composant fibreux représente plus d'environ 50 % en poids de ladite étoffe.

**24.** Procédé tel que défini dans la revendication 23, dans lequel ledit composant fibreux représente entre environ 60 % et environ 90 % en poids de ladite étoffe.

**25.** Procédé tel que défini dans la revendication 23 ou 24, dans lequel ledit composant fibreux contient des fibres cellulosiques.

**26.** Procédé tel que défini dans l'une quelconque des revendications 13 à 25, comprenant le fait de faire adhérer ladite étoffe à une surface de crêpage (44) et de crêper ladite étoffe depuis ladite surface, ladite étoffe crêpée ayant au moins une surface qui contient des pics et des vallées.

**27.** Procédé tel que défini dans la revendication 26, dans lequel, au cours du crêpage, ladite étoffe est supportée par une surface à motifs.

**28.** Procédé tel que défini dans la revendication 27, dans lequel ladite étoffe est pressée, pour venir en prise avec ladite surface de crêpage, à une pression comprise entre environ 50 et environ 350 livres/pouce linéaire (entre 8,9 et 62,3 kg/cm), de préférence entre environ 150 et environ 250 livres/pouce linéaire (entre 26,7 et 44,5 kg/cm).

**29.** Procédé tel que défini dans la revendication 27 ou 28, dans lequel un adhésif de crêpage est utilisé pour faciliter l'adhérence de ladite étoffe à ladite surface de crêpage.

**FIG. 1**

EP 1 599 627 B1

**FIG. 2**

**FIG. 3**

EP 1 599 627 B1

**FIG. 4**

EP 1 599 627 B1

FIG. 5

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 5853859 A, Levy
- US 6103061 A
- US 3765974 A
- US 4340563 A, Appel
- US 3692618 A, Dorschner
- US 3802817 A, Matsuki
- US 3338992 A, Kinney
- US 3341394 A, Kinney
- US 3502763 A, Hartman
- US 3502538 A, Levy
- US 3542615 A, Dobo
- US 5382400 A, Pike
- US 3849241 A, Butin
- US 3855046 A, Hansen
- US 5620779 A, Levy
- US 5962112 A, Haynes
- US 6093665 A, Sayovitz
- US 428267 A, Romano
- US 390708 A, Brown
- US 5284703 A, Everhart
- US 6197404 A, Varona
- US 4041203 A, Brock
- US 5213881 A, Timmons
- US 5464688 A, Timmons
- US 4374888 A, Bomslaeger
- US 5169706 A, Collier
- US 4766029 A, Brock
- US 5226992 A
- US 4981747 A
- US 4965122 A

- US 5336545 A, Morman
- US 4720415 A, VanderWielen
- US 5385775 A, Wright
- US 4789699 A, Kieffer
- US 4781966 A, Taylor
- US 4657802 A, Morman
- US 4655760 A, Morman
- US 5114781 A
- US 5116662 A
- US 6120640 A, Lindsay
- US 4529480 A, Trokhan
- US 3485706 A, Evans
- US 5048589 A, Cook
- US 5399412 A, Sudall
- US 5510001 A, Hermans
- US 5591309 A, Rugowski
- US 6017417 A, Wendt
- US 5492598 A, Hermans
- US 3260778 A, Walton
- US 4919877 A, Parsons
- US 5102606 A, Ake
- US 5498232 A, Scholz
- US 5972039 A, Honeycutt
- US 3879257 A, Gentile
- US 6315864 A, Anderson
- US 6500289 A, Merker
- US 5085514 A, Mallik
- US 5922406 A, Ludford, III
- US 6299729 A, Heath